# EUROPÄISCHE PATENTSCHRIFT

(11) **EP 1 217 575 B1**
(45) Veröffentlichungstag und Bekanntmachung des Hinweises auf die Patenterteilung: **07.07.2010**
(21) Anmeldenummer: 01127300.0
(22) Anmeldetag: 17.11.2001
(51) Int. Cl.: G06K 13/08, G06K 7/00, G06K 17/00

(54) **Verfahren zum Bearbeiten, insbesondere Lesen, Programmieren od.dgl., kartenförmiger Informationsträger**
Method of processing, especially reading or programming card-like information carriers
Procédé de traitement, notamment de lecture ou de programmation des supports d'informations en forme de cartes

(30) Priorität: 19.12.2000 DE 10063313
(43) Veröffentlichungstag der Anmeldung: 26.06.2002
(73) Patentinhaber: Atlantic Zeiser GmbH, 78576 Emmingen (DE)
(72) Erfinder: Berndtsson, Anders, 8260 Stein am Rhein (CH)
(74) Vertreter: Kratzsch, Volkhard

(56) Entgegenhaltungen:
- EP-A- 0 266 929
- EP-A- 0 984 389
- US-A- 4 915 565

## Beschreibung

Die Erfindung bezieht sich auf ein Verfahren zum Bearbeiten, insbesondere Lesen, Programmieren od. dgl., kartenförmiger Informationsträger mit den Merkmalen im Oberbegriff des Anspruchs 1.

Ferner bezieht sich die Erfindung auf eine Einrichtung zum Bearbeiten, insbesondere Lesen, Programmieren od. dgl., kartenförmiger Informationsträger entsprechend dem Oberbegriff des Anspruchs 23.

Kartenförmige Informationsträger dieser Art werden nach ihrer Herstellung personalisiert. Hierbei werden die Daten, die dem jeweiligen Karteninhaber zugehörig sind, auf der Karte programmiert. Dies können z.B. bei Kreditkarten Kontonummern, Anschriften und dergleichen mehr sein. Es gibt Bestrebungen, möglichst viele Informationen auf der Karte zu programmieren, z.B. auch solche Bestrebungen, die Informationen, die sonst auf mehreren unterschiedlichen Karten gespeichert sind, wie Ausweisinformationen mit Sozialversicherungsinformationen und Bankinformationen, auf einer Karte zusammenzufassen, damit der Karteninhaber nur noch eine Karte mit sich führen muss.

Zum Programmieren, insbesondere zur Personalisierung, der einzelnen Karten werden die Kontakte der Kontaktfläche des Chips der Karte an ein Rechnersystem angeschlossen. In einem speziellen Bearbeitungsmodus werden dann die Daten vom Rechner auf den Chip der Karte übertragen.

Die Programmierung, z.B. Personalisierung, der Karten geschieht in der Regel nicht von der Ausgabestelle der Karten, sondern bei dem Dienstleister, der die Karten an Karteninhaber verteilt und der dann die Aufgabe hat, eine Vielzahl von Karten zu personalisieren. Das Bearbeiten, insbesondere Lesen, Programmieren od. dgl., genannter Karten erfordert aus vielen bekannten Gründen eine gewisse Zeit. Die Datenmengen, die auf genannte Karten geschrieben werden sollen, nehmen entsprechend den heutigen Wünschen immer mehr zu. Dies führt dazu, dass die Personalisierung von genannten Karten zu einem Engpass führen kann und deswegen die Forderung nach möglichst großen Bearbeitungsgeschwindigkeiten besteht.

Es sind ein Verfahren und eine Einrichtung der vorgenannten Art bekannt (EP-A-0 984 389 A1), bei denen ein mit einzelnen Haltevorrichtungen bestückter, etwa trommelförmiger Träger um eine solche Achse umlaufend angetrieben wird, die etwa parallel zur Bahn und dabei etwa parallel neben der Transportrichtung der Bahn verläuft, so dass die Bahn etwa tangential, aber etwa parallel zur Drehachse, dieser Trommel gerichtet ist. Die einzelnen Haltevorrichtungen sind so gestaltet, dass diese einen Zwischenraum bilden, in dem die Bahn und die darauf transportierten Karten aufgenommen werden, wobei dann, wenn eine Karte in den Zwischenraum gelangt, diese durch quer dazu gerichtete Kräfte der Haltevorrichtung erfasst und drehend aus dem Bereich der Bahn heraus bewegt wird. Beim Umlauf des trommelförmigen Trägers erfolgt die Bearbeitung einer Karte, die anschließend wieder auf die Bahn übergeben wird. Dieses bekannte Verfahren und die bekannte Einrichtung sind mit dem großen Nachteil behaftet, dass hierbei die Karten in ihrer Bewegung abgebremst und anschließend wieder beschleunigt werden. Die Karten werden zur Abnahme von der Bahn und zur Halterung mittels eines komplizierten Mechanismus geklemmt und klemmend gehalten. Die einzelnen Komponenten und die Mechanik einer derartigen Einrichtung sind kompliziert, aufwendig und teuer. Das Verfahren erlaubt nur relativ geringe Bearbeitungsgeschwindigkeiten, die mit 3.000 Karten pro Stunde angegeben werden.

Aus der US-A-4 915 565 ist eine Einrichtung bekannt, durch die Ausschnitte von einem Wafer, die integrierte Schaltkreise enthalten, vom Wafer ausgestanzt und an einem Rohr mittels Unterdruck festgehalten werden.

Der Erfindung liegt die Aufgabe zugrunde, ein Verfahren der eingangs genannten Art zu schaffen, das eine Bearbeitung genannter Karten in einfacher Weise und mit großen Geschwindigkeiten ermöglicht.

Die Aufgabe ist bei einem Verfahren der eingangs genannten Art gemäß der Erfindung durch die Merkmale im Anspruch 1 gelöst. Weitere besondere Erfindungsmerkmale und vorteilhafte Ausgestaltungen ergeben sich aus den weiteren Ansprüchen.

Die Erfindung bezieht sich ferner auf eine Einrichtung zum Bearbeiten, insbesondere Lesen, Programmieren od. dgl., kartenförmiger Informationsträger, an die die gleiche Aufgabe gestellt wird, die gemäß der Erfindung durch die Merkmale im Anspruch 23 gelöst ist. Weitere vorteilhafte Erfindungsmerkmale und Ausgestaltungen dazu ergeben sich aus den darauffolgenden Ansprüchen.

Das Verfahren und die Einrichtung gemäß der Erfindung sind außerordentlich einfach. Es werden einfache, kostengünstige Bauteile verwendet, wobei die Anzahl der einzelnen Komponenten reduziert ist. Von Vorteil ist, dass die einzelnen Karten sukzessive von der Bahn abgenommen und während der Bewegung, insbesondere eines Umlaufs, des Trägers bearbeitet, z.B. gelesen oder programmiert, werden und z.B. nach einem Umlauf hiernach wieder auf die Bahn zurückgegeben werden, ohne dass hierbei die Transportgeschwindigkeit der Bahn geändert wird. Da der mindestens eine bewegte, insbesondere umlaufende, Träger sich auf Höhe der Bahn oberhalb dieser und längs dieser ausgerichtet befindet, werden die Karten nacheinander in dieser die Bahn enthaltenden Vertikalebene, also etwa quer zur Fläche der Karten, bewegt, d.h. von der Bahn abgenommen und nach Trägerumlauf gegensinnig wieder auf die Bahn abgegeben, ohne dass eine Bewegung der Karten quer zur Bahn geschieht. Es sind für die Bearbeitung der Karten große Geschwindigkeiten erreichbar, z.B. bis zu 50.000 Karten pro Stunde. Eine etwaige Gefahr von Funktionsstörungen hierbei besteht nicht.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische Draufsicht eines kartenförmigen Informationsträgers,
- Fig. 2: eine schematische, teilweise geschnittene Seitenansicht von Teilen einer Einrichtung zur Bearbeitung derartiger kartenförmiger Informationsträger,
- Fig. 3: eine schematische, teilweise geschnittene Seitenansicht einer Einzelheit der Einrichtung zur Bearbeitung kartenförmiger Informationsträger in größerem Maßstab,
- Fig. 4: einen schematischen Schnitt mit teilweiser Seitenansicht eines Teils einer Haltevorrichtung der Einrichtung,
- Fig. 5: eine Ansicht in Pfeilrichtung V in Fig. 3 mit teilweisem Schnitt von Einzelheiten der Einrichtung.

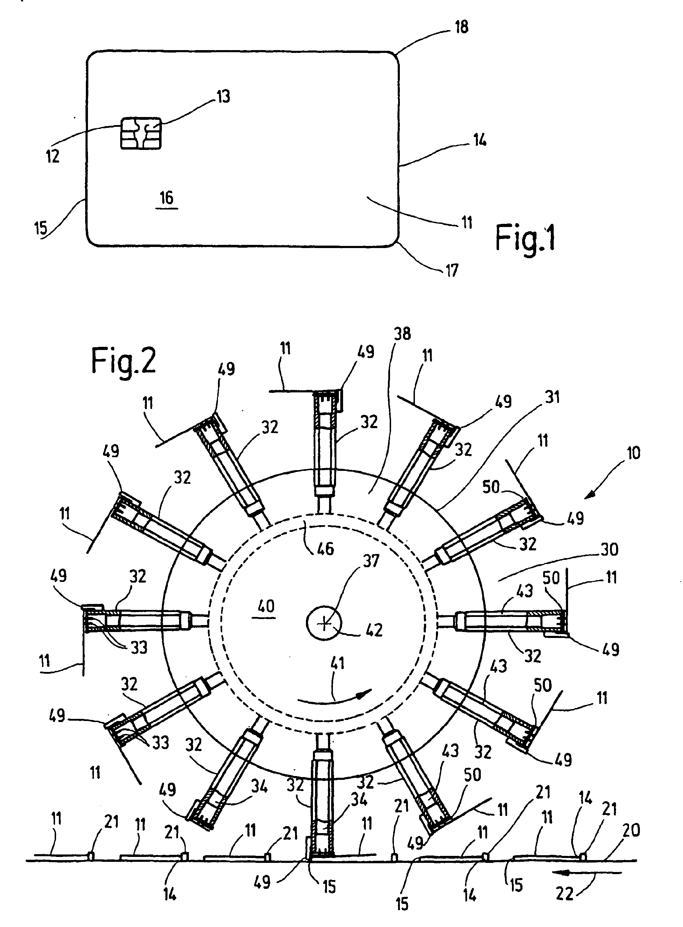

In den Zeichnungen ist schematisch ein hier interessierender Teil einer Einrichtung 10 gezeigt, die generell zum Bearbeiten, insbesondere Lesen, Programmieren oder dergleichen, von kartenförmigen Informationsträgern, wie Scheckkarten, Kreditkarten, Ausweiskarten od. dgl. Karten 11, dient. Derartige Karten 11 sind entsprechend Fig. 1 mit einem integrierten, mindestens einen Speicher aufweisenden, allgemein mit 12 bezeichneten Schaltkreis, Chip od. dgl. versehen, der eine oberseitige Kontaktfläche 13 mit einzelnen Kontakten aufweist. Die Kontaktfläche 13 kann eine Vielzahl einzelner Kontakte, bis hin zu 8 oder 10 Kontakten, haben, die zum Bearbeiten, insbesondere Lesen, Programmieren od. dgl., von Kontaktgebern kontaktiert werden, die dann ihrerseits mit einem Rechnersystem und einer Stromquelle verbunden sind. Die Bearbeitung derartiger Karten 11, insbesondere das Lesen, Programmieren od. dgl., ist generell bekannt und braucht daher im Detail nicht weiter beschrieben zu werden. Von derartigen Einrichtungen 10 wird verlangt, dass insbesondere angesichts der steigenden Datenmengen, die im Zusammenhang mit derartigen Karten 11 zu bearbeiten sind, insbesondere zu lesen und/oder zu programmieren sind, diese eine möglichst große Geschwindigkeit für die Bearbeitung der Karten 11 ermöglichen, wobei z.B. Geschwindigkeiten bis zu 50.000 Karten pro Stunde oder auch noch mehr wünschenswert sind.

Die Einrichtung 10 weist eine allgemein mit 20 bezeichnete Bahn in Form einer Transportstrecke mit Mitnehmern 21 für den Transport der Karten in Pfeilrichtung 22 auf. Diese Bahn 20 in Form einer Transportstrecke hat z.B. mindestens eine Kette, die die Mitnehmer 21 trägt und auf der die Karten 11 aufliegen und in Pfeilrichtung 22, mit einer Kante 14 an jeweils einem Mitnehmer 21 anstoßend, vorwärts transportiert werden. Diese Transportstrecke kann auch mindestens ein Band aufweisen. Jeder Mitnehmer 21 besteht z.B. aus einem Nocken od. dgl.

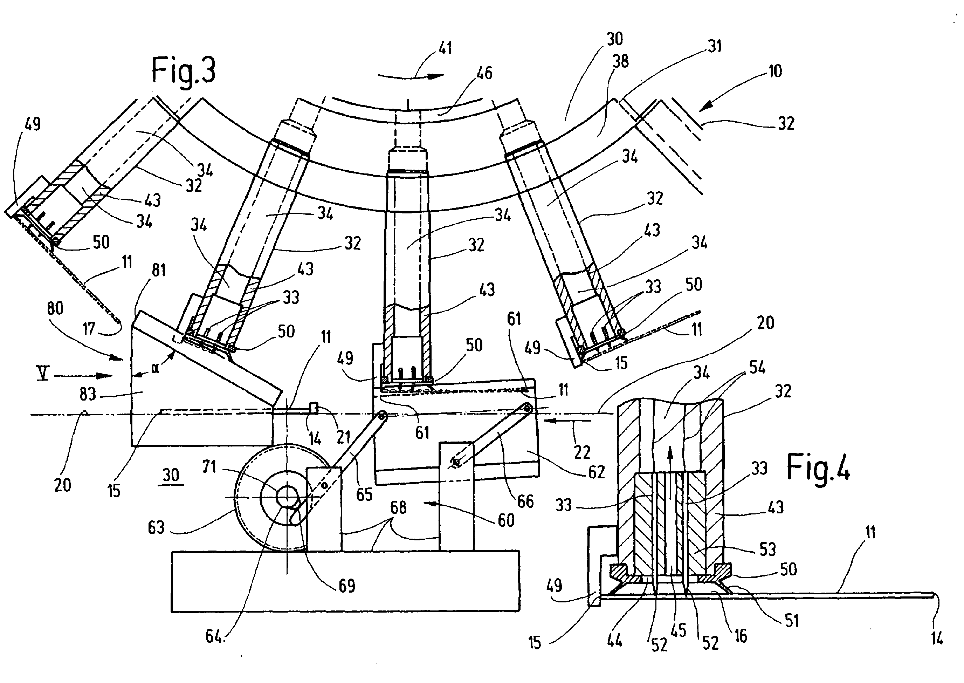

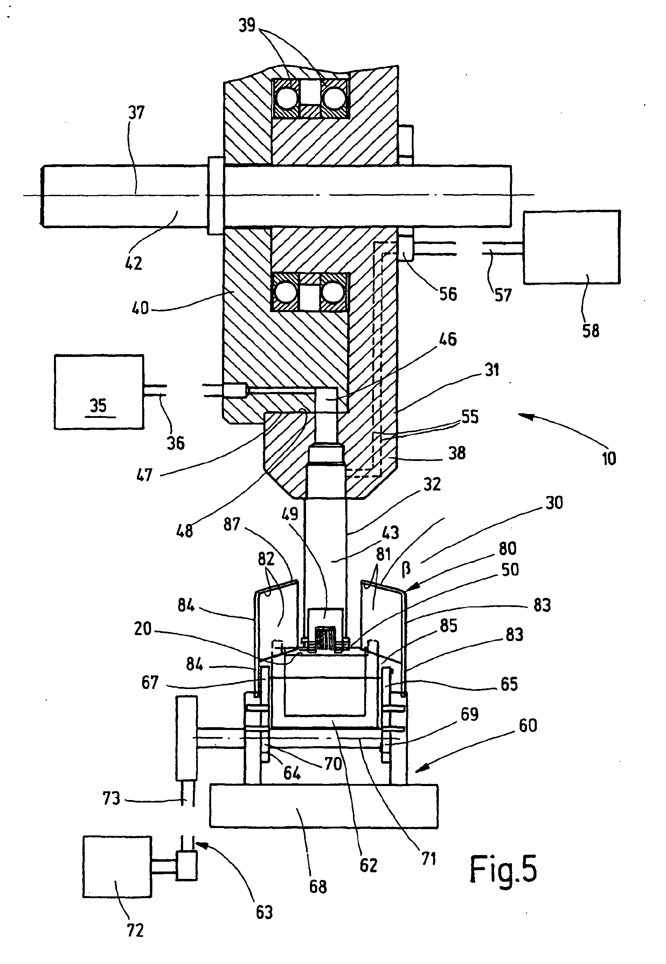

Wie insbesondere aus Fig. 3 und 5 ersichtlich ist, weist die Einrichtung 10 mindestens eine im Bereich der Bahn 20 befindliche Station 30 auf. Es versteht sich gleichwohl, dass in Transportrichtung gemäß Pfeil 22 der Bahn 20 auch mehrere, vorzugsweise gleich gestaltete, Stationen 30 hintereinander angeordnet sein können, von denen z.B. eine oder mehrere Stationen 30 zum Lesen der Speicher der einzelnen Karten 11 dienen und weitere, in Transportrichtung gemäß Pfeil 22 in Abstand folgende Stationen analog der Station 30 zum Programmieren der Speicher der einzelnen Karten 11 dienen. In diesem Fall kann eine Vervielfachung der Bearbeitungsgeschwindigkeit, bei zwei Stationen 30 z.B. eine Verdopplung dieser, erreicht werden. Dabei kann die Zwischenzeit, in der die Karten 11 von der ersten Station 30 zur nächst folgenden Station gebracht werden, für weitere Bearbeitungsschritte genutzt werden, z.B. Überprüfen eines in der ersten Station aus dem jeweiligen Speicher der Karten 11 ausgelesenen Codeschlüssels durch Abgleich mit einem anderen Codeschlüssel, der z.B. in einem das Lesesystem steuernden Rechner integriert ist.

Auch wenn es nicht besonders dargestellt ist, ist statt dessen auch eine andere Gestaltung möglich, bei der quer zur Transportrichtung gemäß Pfeil 22 der Bahn 20 mehrere, vorzugsweise gleich gestaltete, Stationen nebeneinander angeordnet sind, die durch Querbewegung in den Bereich der Bahn 20 in Kartenaufnahmeposition bzw. Kartenabgabeposition bewegbar sind und von denen z.B. eine Station 30 oder auch mehrere Stationen zum Lesen der Speicher der jeweiligen Karten 11 vorgesehen sind und weitere Stationen zum Programmieren der Speicher der jeweiligen Karten 11 dienen.

Die dargestellte Station 30 weist einen bewegten Träger 31 mit mehreren Haltevorrichtungen 32 auf, wobei jede Haltevorrichtung 32 mit einzelnen Kontaktgebern 33 versehen ist, von denen der besseren Übersicht wegen lediglich zwei Kontaktgeber 33 gezeigt sind. Beim gezeigten Ausführungsbeispiel sind am Träger 31 insgesamt 12 Haltevorrichtungen 32 gleicher Art angeordnet. Jede Haltevorrichtung 32 dient zum Erfassen und Festhalten einer jeweils zugeordneten Karte 11 während der Bewegungsphase des Trägers 31 mit in dieser Zeit erfolgender Bearbeitung der Speicher der Karten 11 und hiernach ferner zum Abgeben auf die Bahn 20. Die einzelnen Haltevorrichtungen 32 weisen jeweils eine Druck- oder Saugeinrichtung 34 auf, die mit dem Druck eines Mediums, insbesondere mit Gas, z.B. Luft, und dabei in der Ausbildung als Druckeinrichtung mit Überdruck und in der alternativen Ausbildung als Saugeinrichtung mit Unterdruck arbeitet, wobei mit Hilfe der genannten Druckoder Saugeinrichtung 34 die einzelnen Karten 11 mit der Druckwirkung des Mediums, insbesondere der Saugkraft dieses, erfassbar und festhaltbar sind. Beim gezeigten Ausführungsbeispiel ist jede Haltevorrichtung 32 mit einer mit Unterdruck arbeitenden Saugeinrichtung 34 versehen. Durch diese werden die einzelnen Karten 11 mit Unterdruck des gasförmigen Mediums, z.B. Luft, durch Ansaugen erfasst und festgehalten. Ist statt dessen eine Druckeinrichtung 34 vorgesehen, werden die einzelnen Karten 11 durch diese mittels Überdruck des gasförmigen Mediums, z.B. Luft, durch Andrücken erfasst und festgehalten. In beiden Fällen werden die einzelnen Karten 11 beim Erfassen und Festhalten mit ihren Kontaktflächen 13 zugleich in elektrisch leitenden Berührungskontakt mit den Kontaktgebern 33 gebracht und gehalten, so dass die Karten 11 in dieser Zeit bearbeitet werden können, z.B. gelesen oder programmiert werden können. Nach der erfolgten Bearbeitung in der Station 30 werden dann die einzelnen Karten 11 von den einzelnen Haltevorrichtungen 32 wieder auf die Bahn 20 abgegeben, was z.B. in noch beschriebener Weise auf mechanischem Wege erfolgen kann. Statt dessen oder unterstützend dazu können die einzelnen, an den Haltevorrichtungen 32 angesaugten Karten 11 nach der Bearbeitung auch mittels eines Überdrucks des gasförmigen Mediums, z.B. Luft, durch Wegblasen von den Haltevorrichtungen 32 auf die Bahn 20 abgegeben werden.

Die einzelnen Haltevorrichtungen 32 sind so beschaffen, dass das die einzelnen Karten 11 beaufschlagende Medium, insbesondere das Unterdruckmedium zum Ansaugen, durch die jeweiligen Haltevorrichtungen 32 hindurch zu den Karten 11 geleitet wird, wobei das die Karten 11 beaufschlagende, und zwar ansaugende, Medium dem Träger 31 von einer in Fig. 5 nur schematisch angedeuteten zentralen Versorgungseinheit 35 mit Unterdruckquelle über eine Leitung 36 zugeführt wird.

Der mindestens eine Träger 31 mit den einzelnen Haltevorrichtungen 32, die jeweils mit Kontaktgebern 33 versehen sind, ist um eine solche Achse 37 umlaufend drehbar, die etwa parallel zur Bahn 20 und dabei quer zu dieser, insbesondere etwa rechtwinklig dazu, verläuft. Dabei dreht sich dieser mindestens eine Träger 31 mit den einzelnen Haltevorrichtungen 32 mit Kontaktgebern 33 oberhalb der Bahn 20 und dabei innerhalb einer solchen Ebene, die zumindest im wesentlichen in einer vertikalen Flucht mit der Bahn 20 liegt.

Der mindestens eine Träger 31 weist eine Scheibe 38 auf, die mittels Lagern 39 an einem zentralen Tragteil 40 um die genannte Achse 37 drehbar gehalten ist. Die Scheibe 38 ist dabei mittels einer nicht weiter gezeigten Antriebseinrichtung um die genannte Achse 37 umlaufend antreibbar, und zwar vorzugsweise in der der Vorwärtstransportbewegung der Bahn gemäß Pfeil 22 entgegengesetzten Drehrichtung gemäß Pfeil 41. Teil der Antriebseinrichtung ist z.B. eine Welle 42, mit der die Scheibe 38 drehfest verbunden ist und auf die ein nicht weiter gezeigter Elektromotor, erforderlichenfalls unter Zwischenschaltung eines Getriebes, z.B. eines Antriebsriemens, arbeitet. Die Anordnung kann dabei so getroffen sein, dass die Bearbeitung einer von einer Haltevorrichtung 32 aufgenommenen Karte 11 nach einer Umlaufdrehung des Trägers 31, insbesondere der Scheibe 38, abgeschlossen ist. Der Durchmesser des mindestens einen Trägers 31, insbesondere der Scheibe 38, und/oder dessen Umlaufgeschwindigkeit und/oder die Anzahl der in etwa gleichen Umfangswinkelabständen angeordneten Haltevorrichtungen 32 mit Kontaktgebern 33 können einer vorgegebenen Bearbeitungsleistung entsprechend gewählt und variiert werden.

Die einzelnen Haltevorrichtungen 32 sind aus im wesentlichen radialen Armen 43 gebildet, die z.B. als einzelne Rohre gestaltet sind und eine jeweilige Saugeinrichtung 34 in der Weise aufweisen, dass jeder Arm 43 einen inneren Hohlraum hat, der einen inneren Druckmittelkanal 34 bildet, der zum freien Ende 44 des Armes 43 führt und dort in mindestens eine Öffnung 45 ausmündet, über die durch Unterdruck im inneren Kanal 34 auf eine Karte 11 eine Saugwirkung in der Weise ausgeübt wird, dass die Karte 11 dadurch am Ende 44 des Armes 43 fest und in ausgerichteter Position bleibend gehalten wird. Der die Saugeinrichtung bildende innere Druckmittelkanal 34 jedes Armes 43 steht am anderen Ende, das der Öffnung 45 abgewandt ist, mit einer umlaufenden Ringnut 46 in Verbindung, die in der äußeren Umfangsfläche 47 des Tragteils 40 enthalten ist, auf der die Scheibe 38 mit einer inneren Umfangsfläche 48 umläuft, so dass die Druckmittelkanäle 34, z.B. Bohrungen in der Scheibe 38, bei deren Umlauf fortwährend mit der Ringnut 46 in Verbindung stehen. Jeder Arm 43 wird damit fortwährend über die Ringnut 46 mit Unterdruck versorgt. Die zentrale Versorgungseinheit 35 und überhaupt die Unterdruckversorgung der einzelnen Haltevorrichtungen 32 ist derart beschaffen, dass der den einzelnen Armen 43 zugeführte Unterdruck derart groß bemessen ist, dass er bei lediglich einer am Ende 44 eine Karte 11, die die dortige Öffnung 45 beim Ansaugen verschließt, aufnehmenden Haltevorrichtung 32 zur Festhaltung der Karte 11 ausreichend ist, auch wenn die jeweilige Öffnung 45 aller übrigen Haltevorrichtungen 32, die keine Karte 11 aufgenommen haben und halten, unverschlossen sind und dadurch eine Unterdruckabsenkung erfolgt.

Jede Haltevorrichtung 32, insbesondere jeder Arm 43, trägt am Ende 44 seitlich einen quer verlaufenden Anschlag 49 für die jeweilige Karte 11, der beim Aufnehmen einer Karte 11 zu deren Ausrichtung in der Weise dient, dass die Karte 11 mit ihrer vorderen Kante 15 am Anschlag 49 anschlägt und so ausgerichtet bleibt.

Jede Haltevorrichtung 32, insbesondere jeder Arm 43, weist an dem Ende 44, das die Öffnung 45 enthält, eine diese Öffnung 45 umgebende Dichteinrichtung 50 auf. Die Dichteinrichtung 50 ist vorteilhafterweise elastisch. Sie weist z.B. eine allgemein mit 51 bezeichnete Gummischürze, Gummilippe, einen Faltenbalg od. dgl. auf, die bzw. der beim Ansaugen einer Karte 11 sich unter der Wirkung des Unterdrucks elastisch und dabei zumindest im wesentlichen dicht an die zugewandte Oberseite 16 der Karte 11 anlegt. Aufgrund des elastischen Verhaltens der Dichteinrichtung 50 erfolgt nicht nur eine zuverlässige Abdichtung beim Ansaugen, sondern auch ein Toleranzausgleich.

Jede Haltevorrichtung 32, insbesondere jeder Arm 43, weist in dessen hohlem Inneren gehaltene einzelne Kontaktstifte 52 als Kontaktgeber 33 auf, die mit ihren gerundeten oder spitzen Enden so weit aus der endseitigen Öffnung 45 herausragen, dass sie beim Festhalten jeweils einer Karte 11 durch Unterdruck mit der Kontaktfläche 13, und dabei jeder einzelne Kontaktstift 52 mit einem jeweils zugeordneten Kontakt der Kontaktfläche 13, in elektrisch leitenden Berührungskontakt gebracht und gehalten sind. Von Vorteil kann es sein, wenn die Kontaktgeber 33, insbesondere Kontaktstifte 52, federnde Enden haben. Die Kontaktstifte 52 sind von Isoliermaterial 53 umgeben und mit in Fig. 4 nur angedeuteten elektrischen Leitungen 54 verbunden, die durch das hohle Innere der jeweiligen Haltevorrichtung 32 geführt sind und der Stromversorgung und/oder Informationsleitung dienen. Die einzelnen Leitungen 54 stehen mit nur angedeuteten Leitungen 55 an der Scheibe 38 in Verbindung, die z.B. zu einem nur schematisch angedeuteten Drehübertrager 56 des Trägers 31 führen, der seinerseits über Leitungen 57 mit einer nur schematisch angedeuteten Einheit 58 verbunden ist, die vorzugsweise der zentralen Stromversorgung und/oder Informationsversorgung dient.

Die mindestens eine Station 30 weist eine Übergabevorrichtung 60 auf, die zwischen der Bahn 20 und jeweils einer in deren Bereich gelangenden Haltevorrichtung 32 des Trägers 31 wirksam ist. Mittels der Übergabevorrichtung 60 ist eine Karte 11 von der Bahn 20 nach oben abhebbar und in eine Übernahmelage bringbar, in der die Karte 11 von einer vorbeikommenden, freien Haltevorrichtung 32, insbesondere einem Arm 43, durch Ansaugen übernehmbar ist. Dabei wird die Karte 11 mittels der Übergabevorrichtung 60 in eine in Bezug auf die Ebene der Bahn 20, z.B. in Bezug auf eine Horizontale, schräge Übernahmelage gebracht. Diese Schräge ist in Fig. 3 durch die schräg verlaufende Linie mit 61 nur angedeutet. Der Schrägverlauf der Schrägen 61 ist derart, dass diese in Umlaufrichtung gemäß Pfeil 41 bzw. entgegen der Transportrichtung der Bahn 20 gemäß Pfeil 22 zumindest geringfügig ansteigt. Ersichtlich ist die Übernahmelage nicht horizontal und somit auch nicht rechtwinklig zur Längsmittelachse einer Haltevorrichtung 32, insbesondere eines Armes 43, sondern entsprechend der Schräge 61 zumindest geringfügig schräg, so dass beim Vorbeibewegen eines Armes 43 die Übergabe einer mittels der Übergabevorrichtung 60 von der Bahn 20 nach oben abgehobenen Karte 11 etwas später an den Arm 43 geschieht. Die einzelnen Karten 11 werden somit mittels der Übergabevorrichtung 60 von der Bahn 20 nach oben abgehoben und in eine der Schräge 61 entsprechende Übernahmelage gebracht, in der sie dann mittels der Saugeinrichtung 34 einer Haltevorrichtung 32, insbesondere eines Armes 43, durch Ansaugen übernommen werden.

Die Übergabevorrichtung 60 weist ein Hubglied 62 auf, das unterhalb der Bahn 20 derart angeordnet und gesteuert antreibbar ist, dass das Hubglied 62 eine auf der Bahn 20 transportierte Karte 11 von unten her erfassen und über die Bahn 20 anheben kann. Das Hubglied 62 ist mittels einer Antriebseinrichtung 63 synchron zur Transportgeschwindigkeit der Bahn 20 antreibbar, wobei die Antriebseinrichtung 63 z.B. eine Kurvensteuerung 64 aufweist. Das Hubglied 62 ist mittels zweier auf einer Seite angeordneter schräger Lenker 65, 66 und zwei entsprechenden auf der anderen Seite angeordneten Lenkern, von denen in Fig. 5 lediglich der Lenker 67 sichtbar ist, beweglich gehalten. Die Lenker 65 bis 67 greifen mit einem Ende schwenkbeweglich am Hubglied 62 an, das dadurch gehalten ist und bewegt wird. Mit ihrem anderen Ende sind die Lenker 65 bis 67 beidseitig an einer Halteeinrichtung 68 angelenkt. Die Antriebseinrichtung 63 greift zumindest an einem auf einer Seite des Hubgliedes 62 befindlichen Lenker 67 an. Beim gezeigten Ausführungsbeispiel erfolgt der Angriff an den beiden Lenkern 65 und 67, die beispielsweise eine über ihre untere Anlenkung an der Halteeinrichtung 68 hinausreichende Verlängerung aufweisen, an der ein schematisch angedeuteter jeweiliger Nocken 69, 70 anliegt, der drehfest mit einer Welle 71 der Antriebseinrichtung 63 verbunden ist, die z.B. über einen Motor 72 mit Riementrieb 73 umlaufend angetrieben ist, die ebenfalls Teil der Antriebseinrichtung 63 sind. Beim Umlauf der Welle 71 wird das Hubglied 62 wie eine Wippe zwischen einer unteren Position, in der sich die Hubfläche des Hubgliedes 62 im wesentlichen völlig unterhalb der Bahn 20 befindet, und einer oberen Position bewegt, in der die Hubfläche den Verlauf der Schräge 61 hat.

Die mindestens eine Station 30 weist ferner eine zweite Übergabevorrichtung 80 auf, die in Transportrichtung gemäß Pfeil 22 gesehen auf die erste Übergabevorrichtung 60 mit Abstand folgt. Mittels der zweiten Übergabevorrichtung 80 ist eine Karte 11 vorzugsweise nach einem Umlauf des Trägers 31, insbesondere der Scheibe 38, von einer die Karte 11 festhaltenden Haltevorrichtung 32 ablösbar und auf die Bahn 20 zurückgebbar.

Bei einem nicht gezeigten Ausführungsbeispiel kann diese zweite Übergabevorrichtung 80 so wie die erste Übergabevorrichtung 60 ausgebildet sein und arbeiten und spiegelbildlich zu dieser angeordnet sein, wobei die einzelnen von den Haltevorrichtungen 32 angesaugten Karten 11 z.B. mittels eines Überdruckes durch Wegblasen auf die zweite Übergabevorrichtung abgegeben und von dieser wieder auf die Bahn 20 übergeben werden können.

Beim gezeigten Ausführungsbeispiel ist die zweite Übergabevorrichtung 80 anders als die erste Übergabevorrichtung 60 gestaltet. Sie weist zwei oberhalb der Bahn 20 quer dazu in Abstand voneinander angeordnete Leitflächen 81 und 82 auf, die in Umlaufrichtung des Trägers 31, insbesondere der Scheibe 38, gemäß Pfeil 41 und gegen die Vorwärtstransportbewegung gemäß Pfeil 22 der Bahn 20 schräg abfallen. Aufgrund dieser schräg abfallenden beidseitigen Leitflächen 81, 82 kann beim Umlauf des Trägers 31, insbesondere der Scheibe 38, eine Karte 11, die an einer Haltevorrichtung 32, insbesondere einem Arm 43, gehalten ist, mit ihren der vorderen Kante 14 eigenen beidseitigen vorderen, gerundeten Ecken 17, 18 auf jeweils eine zugeordnete Leitfläche 81, 82 aufstoßen derart, dass die Karte 11 dann bei weiterer Umlaufbewegung in Pfeilrichtung 41 zwangsläufig vom Ende 44 des Armes 43 unter Überwindung des Vakuums abgelöst wird und auf die Bahn 20 durch Herabfallen auf diese überführt wird. Der schräge Verlauf mit Schrägabfall gegen die Transportrichtung gemäß Pfeil 22 ist in Fig. 3 mit dem Winkel α angedeutet.

Die beiden schräg abfallenden Leitflächen 81, 82 verlaufen außerdem, bezogen auf eine zur Ebene der Bahn 20 parallel verlaufende Ebene, die in Fig. 5 z.B. horizontal gerichtet ist, unter einem Winkel β schräg, mit jeweiligem Abfall von innen nach außen. Die zweite Übergabevorrichtung 80 weist einen durch beidseitige Schachtwände 83, 84 gebildeten Schacht 85 auf, der am oberen Endbereich die beidseitigen, schräg abfallenden Leitflächen 81, 82 aufweist. Die Bahn 20 verläuft zwischen den beiden Schachtwänden 83, 84. Die oberen, der Bahn 20 abgewandten Ränder der Schachtwände 83, 84 weisen in Umlaufrichtung des Trägers 31 gemäß Pfeil 41 schräg abfallende, aufeinanderzu gerichtete Randstreifen 86 bzw. 87 auf, deren jeweilige zur Bahn 20 weisende Seite die jeweilige Leitfläche 81 bzw. 82 bildet.

Gelangt bei der Transportbewegung gemäß Pfeil 22 eine auf der Bahn 20 vorwärts bewegte Karte 11 in den Bereich der ersten Übergabevorrichtung 60 und des Hubgliedes 62, so wird die Karte 11 von der Bahn 20 zumindest geringfügig nach oben abgehoben und in die Schräglage 61 gebracht, wobei beim Umlauf des Trägers 31 eine am Ende 44 freie Haltevorrichtung 32, insbesondere ein Arm 43, zu dieser Zeit in den Bereich der abgehobenen Karte 11 gelangt, die mittels der Saugeinrichtung 34 durch Unterdruck an Ende 44, insbesondere im Bereich der Dichteinrichtung 50, angesaugt und auf diese Weise festgehalten wird, so dass bei weiterem Umlauf des Trägers 31 in Pfeilrichtung 41 die Karte 11 am Arm 43 festgehalten ist. Die Karte 11 wird dabei mit ihrer Kante 15 über den Anschlag 49 ausgerichtet und verbleibt in dieser ausgerichteten Position. Beim Ansaugen werden die Kontaktgeber 33 mit den federnden Kontaktstiften 52 gegen zugeordnete Kontakte der Kontaktfläche 13 der Karte 11 gedrückt und in dieser Position gehalten. Während eines Umlaufs des Trägers 31 kann in der Station 30 die Karte 11 z.B. bezüglich enthaltener Informationen, z.B. Codierungen, gelesen werden, wobei dieser Prozess nach einem Umlauf abgeschlossen ist. Statt dessen kann die Karte während eines Umlaufs auch gelesen und/oder programmiert werden. Nach einem Umlauf gelangt die Haltevorrichtung 32 mit der Karte 11 in den Bereich der zweiten Übergabevorrichtung 80, wobei die Karte 11 mit den Ecken 17, 18 voran in den Schacht 85 einfährt und dabei mit ihren Ecken 17, 18 an der zugeordneten Leitfläche 81 bzw. 82 anstößt und durch Verschiebung entlang den Leitflächen 81, 82 gegen die Transportrichtung gemäß Pfeil 22 nach vorn bewegt wird mit einhergehender Umlaufbewegung der Haltevorrichtung 32. Die Karte 11 wird dabei zwangsläufig mit ihrem vorderen Ende von der Dichteinrichtung 50 und dem Ende 44 der Haltevorrichtung 32 wegbewegt, so dass die Karte 11 gewissermaßen gewaltsam gegen die Wirkung des Vakuums von der Dichteinrichtung 50 und dem Ende 44 abgelöst wird. Die Karte 11 gelangt auf die Oberseite der Bahn 20 und wird dann, wenn der Mitnehmer 21 die Kante 14 erreicht, in Transportrichtung gemäß Pfeil 22 mitgenommen.

Wenn die Einrichtung 10 mehrere hintereinander angeordnete Stationen analog der Station 30 aufweist, so werden die einzelnen Karten 11 z.B. in der ersten Station entsprechend der Station 30 bezüglich enthaltener Informationen, z.B. Codierungen, bei einem Umlauf des Trägers 31 gelesen und danach wieder auf die Bahn 20 abgegeben. In der Zeit, in der die Karte 11 der in Transportrichtung gemäß Pfeil 22 folgenden zweiten und/oder dritten analogen Station 30 zugeführt wird, kann der in der ersten Station 30 aus der Karte 11 ausgelesene Codeschlüssel mit einem anderen, gespeicherten Codeschlüssel abgeglichen und decodiert werden und in dieser Weise also die Zwischenzeit genutzt werden. Wenn dann die Karte 11 die nachgeordnete zweite analoge Station 30 erreicht, kann in dieser Station die Karte 11 dann bei einem Umlauf des Trägers 31 programmiert werden, z.B. personalisiert werden.

Die Einrichtung 10 gemäß der Erfindung hat den Vorteil, dass die einzelnen Komponenten sehr einfach aufgebaut sind, leicht und kostengünstig sind, nur wenig Bauteile aufweisen und schon deswegen große Umlaufgeschwindigkeiten für den Träger 31 ermöglichen. Das Lesen und/oder Programmieren einer Karte 11 findet während des Umlaufs des Trägers 31 statt, wodurch man Zeit gewinnt, so dass auch bei schneller Kartenfolge eine Vielzahl von Informationen in kürzester Zeit gelesen und auf die Karte 11 geschrieben werden kann. Die beschriebenen Einzelheiten der Einrichtung 10, die das Aufnehmen einer Karte von der Bahn, Festhalten mit Kontaktieren und Wiederabgeben auf die Bahn ermöglichen, sind mechanisch außerordentlich einfach und kostengünstig gestaltet. Die Einrichtung 10 gestattet es, in kurzer Zeit und damit schnell eine große Anzahl von Karten zu bearbeiten, insbesondere zu lesen und/oder zu programmieren, wobei Geschwindigkeiten von z.B. 50.000 Karten pro Stunde oder auch mehr erreichbar sind. Die Gefahr etwaiger Funktionsstörungen ist ausgeschlossen.

## Patentansprüche

1. Verfahren zum Bearbeiten, insbesondere Lesen, Programmieren od. dgl., kartenförmiger Informationsträger, wie Scheckkarten, Kreditkarten, Ausweiskarten oder dergleichen Karten (11), die mit einem integrierten, mindestens einen Speicher aufweisenden Schaltkreis (12), Chip od. dgl. versehen sind, wobei die Karten (11) entlang einer linear verlaufenden Bahn (20) mindestens einer Station (30) zugeführt werden, in der die Karten (11) einzeln von jeweiligen mit Kontaktgebern (33) versehenen Haltevorrichtungen (32) mindestens eines bewegten Trägers (31) erfasst, festgehalten und während der Bewegung des Trägers (31) von einer Einheit (58) ausgehend über die Kontaktgeber (33) bearbeitet werden und wobei die Karten (11) danach von den Haltevorrichtungen (32) wieder auf die Bahn (20) abgegeben werden,
**dadurch gekennzeichnet,**
**dass** der mindestens eine Träger (31) um eine oberhalb der Bahn (30) und quer zu dieser verlaufende Achse (37) innerhalb einer solchen Ebene umlaufend gedreht wird, die zumindest im wesentlichen in einer Flucht mit der Bahn (20) verläuft, derart, dass die Karten (11) nacheinander in dieser die Bahn (20) enthaltenden Ebene, quer zur Fläche der Karten (11), von der Bahn (20) abgenommen, während der Bewegung des Trägers (31) bearbeitet und hiernach auf die Bahn (20) zurückgegeben werden, und dass die einzelnen Karten (11) mittels Druckwirkung eines Mediums erfasst und festgehalten werden.

2. Verfahren nach Anspruch 1,
**dadurch gekennzeichnet,**
**dass** die einzelnen Karten (11) beim Erfassen und Festhalten mittels Druckwirkung zugleich mit ihrer Kontaktfläche (13) in elektrisch leitenden Berührungskontakt mit den Kontaktgebern (33) gebracht und gehalten werden.

3. Verfahren nach Anspruch 1 oder 2,
**dadurch gekennzeichnet,**
**dass** die einzelnen Karten (11) mittels Überdrucks eines gasförmigen Mediums, z.B. Luft, durch Andrücken erfasst und festgehalten werden.

4. Verfahren nach Anspruch 1 oder 2,
**dadurch gekennzeichnet,**
**dass** die einzelnen Karten (11) mittels Unterdrucks eines gasförmigen Mediums, z.B. Luft, durch Ansaugen erfasst und festgehalten werden.

5. Verfahren nach einem der Ansprüche 1 bis 4,
**dadurch gekennzeichnet,**
**dass** die einzelnen Karten (11) nach der Bearbeitung durch Wegfall der Druckwirkung auf die Bahn (20) abgegeben werden.

6. Verfahren nach den Ansprüchen 4 und 5,
**dadurch gekennzeichnet,**
**dass** die einzelnen angesaugten Karten (11) nach der Bearbeitung mittels eines Überdrucks des gasförmigen Mediums, z.B. Luft, durch Wegblasen auf die Bahn (20) abgegeben werden.

7. Verfahren nach einem der Ansprüche 1 bis 6,
**dadurch gekennzeichnet,**
**dass** die einzelnen Karten (11) nach der Bearbeitung auf mechanischem Wege von den Haltevorrichtungen (32) abgelöst und auf die Bahn (20) abgegeben werden.

8. Verfahren nach einem der Ansprüche 1 bis 7,
**dadurch gekennzeichnet,**
**dass** das die einzelnen Karten (11) beaufschlagende Medium, insbesondere das Unterdruckmedium zum Ansaugen bzw. das Überdruckmedium zum Wegblasen, durch die jeweiligen einzelnen Haltevorrichtungen (32) hindurch zu den einzelnen Karten (11) geleitet wird.

9. Verfahren nach einem der Ansprüche 1 bis 8,
**dadurch gekennzeichnet,**
**dass** das die einzelnen Karten (11) beaufschlagende Medium, insbesondere das Unterdruckmedium zum Ansaugen bzw. das Überdruckmedium zum Wegblasen, von einer Versorgungseinheit (35), insbesondere einer Unterdruckquelle, dem Träger (31) zugeführt wird.

10. Verfahren nach einem der Ansprüche 1 bis 9,
**dadurch gekennzeichnet,**
**dass** der mindestens eine Träger (31) mit den einzelnen Haltevorrichtungen (32) mit Kontaktgebern (33) umlaufend drehbar ist.

11. Verfahren nach Anspruch 10,
**dadurch gekennzeichnet,**
**dass** der mindestens eine Träger (31) um eine etwa parallel zur Bahn (20) und etwa rechtwinklig dazu verlaufende Achse (37) drehbar ist.

12. Verfahren nach einem der Ansprüche 1 bis 11,
**dadurch gekennzeichnet,**
**dass** der mindestens eine Träger (31) mit den einzelnen Haltevorrichtungen (32) mit Kontaktgebern (33) sich oberhalb der Bahn (20) umlaufend dreht.

13. Verfahren nach einem der Ansprüche 1 bis 12,
**dadurch gekennzeichnet,**
**dass** die Bearbeitung einer jeweiligen Karte (11) nach einer Umlaufdrehung des mindestens einen Trägers (31) abgeschlossen ist.

14. Verfahren nach einem der Ansprüche 1 bis 13,
**dadurch gekennzeichnet,**
**dass** der Durchmesser des mindestens einen Trägers (31) und/oder dessen Umlaufgeschwindigkeit und/oder die Anzahl der in Umfangswinkelabständen am Träger (31) sitzenden Haltevorrichtungen (32) mit Kontaktgebern (33) einer vorgegebenen Bearbeitungsleistung entsprechend gewählt sind.

15. Verfahren nach einem der Ansprüche 1 bis 14,
**dadurch gekennzeichnet,**
**dass** die elektrische Energie und die Informationen mittels eines Drehübertragers (56) auf den mindestens einen Träger (31) und dessen einzelne Kontaktgeber (33) übertragen werden.

16. Verfahren nach einem der Ansprüche 1 bis 15,
**dadurch gekennzeichnet,**
**dass** die einzelnen Karten (11) in der Station (30) an die jeweiligen mit Kontaktgebern (33) versehenen Haltevorrichtungen (32) des mindestens einen Trägers (31) in einer Übernahmelage (Schräge 61) übergeben werden, in der die einzelnen Karten (11) von der Bahn (20) und nach oben abgehoben sind.

17. Verfahren nach Anspruch 16,
**dadurch gekennzeichnet,**
**dass** sich die jeweiligen Karten (11) in ihrer Übernahmelage (Schräge 61) in einer Ebene erstrecken, die in Bezug auf die Ebene der Bahn (20) schräg verläuft.

18. Verfahren nach einem der Ansprüche 1 bis 17,
**dadurch gekennzeichnet,**
**dass** die einzelnen Karten (11) vor der Übergabe an eine jeweilige Haltevorrichtung (32) mit Kontaktgebern (33) mittels einer Übergabevorrichtung (60) von der Bahn (20) genommen, insbesondere abgehoben, und in die Übemahmelage (Schräge 61) gebracht werden.

19. Verfahren nach einem der Ansprüche 1 bis 18,
**dadurch gekennzeichnet,**
**dass** die einzelnen Karten (11) an den jeweiligen Haltevorrichtungen (32) in reproduzierbarer Lage ausgerichtet werden, z.B. mittels eines Anschlages (49).

20. Verfahren nach einem der Ansprüche 1 bis 19,
**dadurch gekennzeichnet,**
**dass** die einzelnen Karten (11) in mehreren Stationen (30) hintereinander oder nebeneinander bearbeitet werden.

21. Verfahren nach einem der Ansprüche 1 bis 20,
**dadurch gekennzeichnet,**
**dass** die einzelnen Karten (11) in einer ersten Station (30) bezüglich enthaltener Informationen, z.B. Codierungen, gelesen werden und in einer folgenden zweiten Station und/oder weiteren Station anschließend programmiert werden.

22. Verfahren nach einem der Ansprüche 20 bis 22,
**dadurch gekennzeichnet,**
**dass** die einzelnen Karten (11) nach Passieren der ersten Station (30) wieder auf die Bahn (20) abgegeben werden und in der zweiten Station von der Bahn (20) wieder aufgenommen werden.

23. Einrichtung zum Bearbeiten, insbesondere Lesen, Programmieren od. dgl., kartenförmiger Informationsträger, wie Scheckkarten, Kreditkarten, Ausweiskarten oder dergleichen Karten (11), die mit einem integrierten, mindestens einen Speicher aufweisenden Schaltkreis (12), Chip, od. dgl. versehen sind, mit einer linear verlaufenden Bahn (20) in Form einer Transportstrecke für den Transport der Karten (11), mit mindestens einer im Bereich der Bahn (20) befindlichen Station (30), die zumindest einen bewegten Träger (31) mit mehreren, jeweils mit Kontaktgebern (33) versehenen Haltevorrichtungen (32) aufweist, die zum Erfassen und Festhalten einer jeweiligen Karte (11) während der Bewegungsphase des Trägers (31) mit in dieser Zeit erfolgender Bearbeitung und zum Abgeben auf die Bahn (20) dienen,
**dadurch gekennzeichnet,**
**dass** der mindestens eine Träger (31) um eine oberhalb der Bahn (20) und quer zu dieser verlaufende Achse (37) drehbar gehalten ist und sich oberhalb der Bahn (20) innerhalb einer solchen Ebene umlaufend dreht, die zumindest im wesentlichen in einer Flucht mit der Bahn (20) verläuft, derart, dass die Karten nacheinander in dieser die Bahn (20) enthaltenden Ebene, quer zur Fläche der Karten, von der Bahn (20) abgenommen, während der Bewegung des Trägers (31) bearbeitet und hiernach auf die Bahn (20) zurückgegeben werden, und dass die einzelnen Haltevorrichtungen (32) jeweils eine mit Druck eines Mediums arbeitende Druckeinrichtung oder Saugeinrichtung (34) aufweisen, mit deren Hilfe die einzelnen Karten (11) mit Druckwirkung des Mediums, insbesondere Saugkraft, erfassbar und festhaltbar sind.

24. Einrichtung nach Anspruch 23,
**dadurch gekennzeichnet,**
**dass** die Druckeinrichtung oder Saugeinrichtung (34) der Haltevorrichtungen (32) von einer zentralen Versorgungseinheit (35) mit unter Druck, z.B. Unterdruck, stehendem Medium, insbesondere Gas, z.B. Luft, gespeist werden.

25. Einrichtung nach Anspruch 23 oder 24,
**dadurch gekennzeichnet,**
**dass** der mindestens eine Träger (31) eine Scheibe (38) aufweist, die mittels einer Antriebseinrichtung (42) umlaufend antreibbar ist, vorzugsweise in einer der Vorwärtstransportrichtung (22) der Bahn (20) entgegengesetzten Drehrichtung (41).

26. Einrichtung nach einem der Ansprüche 23 bis 25,
**dadurch gekennzeichnet,**
**dass** die einzelnen Haltevorrichtungen (32) aus im wesentlichen radialen Armen (43) gebildet sind, die in etwa gleichen Umfangswinkelabständen voneinander am mindestens einen Träger (31), insbesondere der Scheibe (38), angeordnet sind und Druckeinrichtungen oder Saugeinrichtungen (34) aufweisen.

27. Einrichtung nach Anspruch 26,
**dadurch gekennzeichnet,**
**dass** jeder Arm (43) als Druckeinrichtung oder Saugeinrichtung (34) einen inneren Druckmittelkanal enthält, der zum freien Ende (44) des Armes (43) führt und dort in mindestens einer Öffnung (45) mündet, über die eine Druckwirkung, insbesondere Unterdruckwirkung, auf eine Karte (11) in der Weise ausgeübt wird, dass die Karte (11) dadurch am Ende (44) des Armes (43) gehalten wird.

28. Einrichtung nach Anspruch 27,
**dadurch gekennzeichnet,**
**dass** der innere Druckmittelkanal (34) jedes Armes (43) am der Öffnung (45) abgewandten anderen Ende mit einer umlaufenden Ringnut (46) in Verbindung steht, die an einem die Scheibe (38) tragenden zentralen Tragteil (40) vorgesehen ist, jeden Arm (43) mit Druckmedium, insbesondere Unterdruck, versorgt und mit der zentralen Versorgungseinheit (35), insbesondere Unterdruckquelle, in Verbindung steht.

29. Einrichtung nach einem der Ansprüche 23 bis 28,
**dadurch gekennzeichnet,**
**dass** jede Haltevorrichtung (32), insbesondere jeder Arm (43), am die Öffnung (45) enthaltenden Ende (44) eine die Öffnung (45) umgebende, elastische Dichteinrichtung (50), z.B. eine Gummischürze (51), Gummilippe, einen Faltenbalg od. dgl., aufweist, an der eine jeweils unter Druck, insbesondere Unterdruck, am Arm (43) gehaltene Karte (11) zumindest im wesentlichen dicht anliegt.

30. Einrichtung nach einem der Ansprüche 23 bis 29,
**dadurch gekennzeichnet,**
**dass** der von der zentralen Versorgungseinheit (35) erzeugte und einzelnen Haltevorrichtungen (32), insbesondere Armen (43), zugeführte Unterdruck derart groß bemessen ist, dass er bei lediglich einer am Ende (44) eine Karte (11), die die dortige Öffnung (45) beim Ansaugen verschließt, aufnehmenden Haltevorrichtung (32) zur Festhaltung der Karte (11) ausreichend ist, während die jeweilige Öffnung (45) der übrigen Haltevorrichtungen (32) unverschlossen ist.

31. Einrichtung nach einem der Ansprüche 23 bis 30,
**dadurch gekennzeichnet,**
**dass** jede Haltevorrichtung (32), insbesondere jeder Arm (43), am Ende (44) einen quer verlaufenden Anschlag (49) für jeweils eine Karte (11) trägt.

32. Einrichtung nach einem der Ansprüche 23 bis 31,
**dadurch gekennzeichnet,**
**dass** die einzelnen Haltevorrichtungen (32), insbesondere Arme (43), jeweils im Inneren gehaltene einzelne Kontaktstifte (52) als Kontaktgeber (33) aufweisen, die mit ihren gerundeten oder spitzen Enden so weit aus der endseitigen Öffnung (45) herausragen, dass sie beim Festhalten jeweils einer Karte (11) mit deren Kontaktfläche (13) in elektrisch leitenden Berührungskontakt gebracht und gehalten sind.

33. Einrichtung nach Anspruch 32,
**dadurch gekennzeichnet,**
**dass** die Enden der Kontaktgeber (33), insbesondere Kontaktstifte (52), federnd sind.

34. Einrichtung nach einem der Ansprüche 23 bis 33,
**dadurch gekennzeichnet,**
**dass** die Kontaktgeber (33), insbesondere die Kontaktstifte (52), jeder Haltevorrichtung (32) mit elektrischen Leitungen (54) verbunden sind, die durch das Innere der jeweiligen Haltevorrichtung (32) geführt sind und der Energieversorgung und/oder Informationsleitung dienen.

35. Einrichtung nach Anspruch 34,
**dadurch gekennzeichnet,**
**dass** die elektrischen Leitungen (54, 55) zu einem Drehübertrager (56) des Trägers (31), insbesondere der Scheibe (38), geführt sind, der seinerseits mit einer der vorzugsweise zentralen Stromversorgung und/oder Informationsversorgung dienenden Einheit (58) verbunden ist.

36. Einrichtung nach einem der Ansprüche 23 bis 35,
**dadurch gekennzeichnet,**
**dass** die mindestens eine Station (30) eine zwischen der Bahn (20) und einer Haltevorrichtung (32) des Trägers (31), insbesondere der Scheibe (38), wirksame Übergabevorrichtung (60) aufweist, mittels der eine Karte (11) von der Bahn (20) abhebbar und in eine in Bezug auf die Ebene der Bahn (20) vorzugsweise schräge Übemahmelage (61) bringbar ist, in der die Karte (11) von einer Haltevorrichtung (32), insbesondere einem Arm (43), durch Ansaugen übernehmbar ist.

37. Einrichtung nach Anspruch 36,
**dadurch gekennzeichnet,**
**dass** die Übergabevorrichtung (60) ein Hubglied (62) aufweist, das unterhalb der Bahn (20) derart angeordnet und gesteuert antreibbar ist, dass mittels des Hubgliedes (62) eine auf der Bahn (20) transportierte Karte (11) von unten her erfassbar und über die Bahn (20) anhebbar ist.

38. Einrichtung nach Anspruch 37,
**dadurch gekennzeichnet,**
**dass** das Hubglied (62) mittels einer Antriebseinrichtung (63) synchron zur Transportgeschwindigkeit der Bahn (20) antreibbar ist.

39. Einrichtung nach Anspruch 37 oder 38,
**dadurch gekennzeichnet,**
**dass** das Hubglied (62) mittels einer Kurvensteuerung (64) antreibbar ist.

40. Einrichtung nach einem der Ansprüche 37 bis 39,
**dadurch gekennzeichnet,**
**dass** das Hubglied (62) mittels zweier auf jeder Seite angeordneter schräger Lenker (65 bis 67) beweglich gehalten ist.

41. Einrichtung nach einem der Ansprüche 38 bis 40,
**dadurch gekennzeichnet,**
**dass** die Antriebseinrichtung (63) zumindest an einem auf einer Seite des Hubgliedes (62) angeordneten Lenker (65, 67) angreift.

42. Einrichtung nach einem der Ansprüche 23 bis 41,
**dadurch gekennzeichnet,**
**dass** die mindestens eine Station (30) in Transportrichtung (22) der Bahn (20) in Abstand von der Übergabevorrichtung (60) eine zweite Übergabevorrichtung (80) aufweist, mittels der eine Karte (11), vorzugsweise nach einem Umlauf des Trägers (31), insbesondere der Scheibe (38), von einer die Karte (11) festhaltenden Haltevorrichtung (32) ablösbar und auf die Bahn (20) zurückgebbar ist.

43. Einrichtung nach Anspruch 42,
**dadurch gekennzeichnet,**
**dass** die zweite Übergabevorrichtung etwa spiegelbildlich zur ersten Übergabevorrichtung (60) angeordnet und dieser entsprechend ausgebildet ist.

44. Einrichtung nach Anspruch 42,
**dadurch gekennzeichnet,**
**dass** die zweite Übergabevorrichtung (80) zwei oberhalb der Bahn (20) und quer dazu in Abstand voneinander angeordnete, in Umlaufrichtung des Trägers (31), insbesondere der Scheibe (38), und gegen die Vorwärtstransportrichtung (22) der Bahn (20) schräg abfallende Leitflächen (81, 82) aufweist, auf die beim Umlauf des Trägers (31) eine an einer Haltevorrichtung (32) gehaltene Karte (11) mit ihren beidseitigen vorderen Ecken (17, 18) aufstößt, derart, dass die Karte (11) bei weiterer Umlaufbewegung vom Ende (44) der Haltevorrichtung (32) abgelöst und auf die Bahn (20) überführt wird.

45. Einrichtung nach Anspruch 44,
**dadurch gekennzeichnet,**
**dass** die schräg abfallenden Leitflächen (81, 82) in Bezug auf eine zur Ebene der Bahn (20) etwa parallele Ebene unter einem Winkel (β) schräg verlaufen mit Abfall jeweils von innen nach außen.

46. Einrichtung nach Anspruch 44 oder 45,
**dadurch gekennzeichnet,**
**dass** die zweite Übergabevorrichtung (80) einen Schacht (85) aufweist, der am oberen Endbereich die beidseitigen, schräg abfallenden Leitflächen (81, 82) aufweist.

47. Einrichtung nach Anspruch 46,
**dadurch gekennzeichnet,**
**dass** der Schacht (85) beidseitige Schachtwände (83, 84) hat, zwischen denen die Bahn (20) verläuft und deren obere, der Bahn (20) abgewandte Ränder in Umlaufrichtung des Trägers (31) schräg (Winkel α) abfallende, aufeinanderzu gerichtete Randstreifen (86, 87) aufweisen, deren jeweilige zur Bahn (20) weisende Seite die jeweilige Leitfläche (81, 82) bildet.

48. Einrichtung nach einem der Ansprüche 23 bis 47,
**dadurch gekennzeichnet,**
**dass** in Transportrichtung (22) der Bahn (20) mehrere, vorzugsweise gleichgestaltete, Stationen (30) hintereinander angeordnet sind, von denen z.B. eine oder mehrere zum Lesen der Speicher der Karten (11) und weitere anschließende zum Programmieren der Speicher der Karten (11) vorgesehen sind.

49. Einrichtung nach einem der Ansprüche 23 bis 48,
**dadurch gekennzeichnet,**
**dass** quer zur Transportrichtung (22) der Bahn (20) mehrere, vorzugsweise gleichgestaltete, Stationen nebeneinander angeordnet sind, die durch Querbewegung in den Bereich der Bahn (20) in Kartenaufnahmeposition bzw. Kartenabgabeposition bewegbar sind und von denen z.B. eine oder mehrere Stationen zum Lesen der Speicher der Karten (11) und weitere Stationen zum Programmieren der Speicher der Karten (11) vorgesehen sind.

## Claims

1. Method for processing, in particular reading, programming or the like, card-like information carriers, such as cheque cards, credit cards, identification cards or similar cards (11), which are provided with an integrated electrical circuit (12), chip or the like which has at least one memory, with the cards (11) being fed along a linearly running path (20) of at least one station (30) in which the cards (11) are individually grasped by respective holding apparatuses (32), which are provided with contact sensors (33), of at least one moving carrier (31), are held tightly and are processed by means of the contact sensors (33) during movement of the carrier (31) starting from a unit (58), and with the cards (11) then being discharged onto the path (20) again by the holding apparatuses (32), **characterized in that** the at least one carrier (31) is rotated about an axis (37), which runs above the path (20) and transverse to the said path, so as to revolve within a plane which runs at least substantially in alignment with the path (20) in such a way that the cards (11) are removed from the path (20) one after the other in this plane which contains the path (20), transverse to the surface of the cards (11), are processed during the movement of the carrier (31) and then returned to the path (20), and **in that** the individual cards (11) are grasped and held tightly by means of the pressure action of a medium.

2. Method according to Claim 1, **characterized in that** the individual cards (11) are at the same time brought into and held in electrically conductive physical contact with the contact sensors (33) by way of their contact area (13) when the said cards are grasped and held tightly by means of a pressure action.

3. Method according to Claim 1 or 2, **characterized in that** the individual cards (11) are grasped and held tightly by contact pressure by means of the superatmospheric pressure of a gaseous medium, for example air.

4. Method according to Claim 1 or 2, **characterized in that** the individual cards (11) are grasped and held tightly by suction by means of the subatmospheric pressure of a gaseous medium, for example air.

5. Method according to one of Claims 1 to 4, **characterized in that** the individual cards (11) are discharged onto the path (20) by cancelling the pressure action following processing.

6. Method according to Claims 4 and 5, **characterized in that** the individual cards (11) which are subjected to a suction action are discharged onto the path (20) by being blown away by means of a superatmospheric pressure of the gaseous medium, for example air, following processing.

7. Method according to one of Claims 1 to 6, **characterized in that** the individual cards (11) are detached from the holding apparatuses (32) and discharged onto the path (20) in a mechanical manner following processing.

8. Method according to one of Claims 1 to 7, **characterized in that** the medium, in particular the subatmospheric pressure medium for suction or the superatmospheric pressure medium for blowing away, which acts on the individual cards (11) is conducted to the individual cards (11) through the respective individual holding apparatuses (32).

9. Method according to one of Claims 1 to 8, **characterized in that** the medium, in particular the subatmospheric pressure medium for suction or the superatmospheric pressure medium for blowing away, which acts on the individual cards (11) is fed to the carrier (31) by a supply unit (35), in particular a subatmospheric pressure source.

10. Method according to one of Claims 1 to 9, **characterized in that** the at least one carrier (31) having the individual holding apparatuses (32) with contact sensors (33) can be rotated so as to revolve.

11. Method according to Claim 10, **characterized in that** the at least one carrier (31) can be rotated about an axis (37) which runs approximately parallel to the path (20) and approximately perpendicular to the said path.

12. Method according to one of Claims 1 to 11, **characterized in that** the at least one carrier (31) having the individual holding apparatuses (32) with contact sensors (33) rotates such that it revolves above the path (20).

13. Method according to one of Claims 1 to 12, **characterized in that** the processing of a respective card (11) is completed following one revolution of the at least one carrier (31).

14. Method according to one of Claims 1 to 13, **characterized in that** the diameter of the at least one carrier (31) and/or its speed of revolution and/or the number of holding apparatuses (32) which are situated at circumferential angular distances on the carrier (31) and have contact sensors (33) are/is selected in accordance with a predefined processing rate.

15. Method according to one of Claims 1 to 14, **characterized in that** the electrical energy and the information are transmitted to the at least one carrier (31) and its individual contact sensors (33) by means of a rotary transmitter (56).

16. Method according to one of Claims 1 to 15, **characterized in that** the individual cards (11) in the station (30) are transmitted to the respective holding apparatuses (32), which are provided with contact sensors (33), of the at least one carrier (31) in an acceptance position (slope 61) in which the individual cards (11) are lifted away from the path (20) and upward.

17. Method according to Claim 16, **characterized in that,** in their acceptance position (slope 61), the respective cards (11) extend in a plane which runs obliquely in relation to the plane of the path (20).

18. Method according to one of Claims 1 to 17, **characterized in that** the individual cards (11) are removed, in particular lifted away, from the path (20) and put into the acceptance position (slope 61) by means of a transfer apparatus (60) before transfer to a respective holding apparatus (32) with contact sensors (33).

19. Method according to one of Claims 1 to 18, **characterized in that** the individual cards (11) are aligned with the respective holding apparatuses (32) in a reproducible position, for example by means of a stop (49).

20. Method according to one of Claims 1 to 19, **characterized in that** the individual cards (11) are processed one behind the other or next to one another in a plurality of stations (30).

21. Method according to one of Claims 1 to 20, **characterized in that** the individual cards (11) are read for contained information, for example codings, in a first station (30) and are then programmed in a following second station and/or further station.

22. Method according to one of Claims 20 to 22, **characterized in that** the individual cards (11) are discharged to the path (20) again after passing the first station (30) and are received by the path (20) again in the second station.

23. Device for processing, in particular reading, programming or the like, card-like information carriers, such as cheque cards, credit cards, identification cards or similar cards (11), which are provided with an integrated electrical circuit (12), chip or the like which has at least one memory, having a linearly running path (20) in the form of a transportation section for transporting the cards (11), having at least one station (30) which is located in the region of the path (20) and has at least one moving carrier (31) having a plurality of holding apparatuses (32) which are each provided with contact sensors (33) and serve to grasp and tightly hold a respective card (11) during the movement phase of the carrier (31) with processing which takes place during this time, and to discharge the said card onto the path (20), **characterized in that** the at least one carrier (31) is held such that it can rotate about an axis (37) which runs above the path (20) and transverse to said path and rotates so as to revolve above the path (20) within a plane which runs at least substantially in alignment with the path (20) in such a way that the cards are removed from the path (20) one after the other in this plane, which contains the path (20), transverse to the surface of the cards, are processed during the movement of the carrier (31) and are then returned to the path (20), and **in that** the individual holding apparatuses (32) in each case have a pressure device or suction device (34) which operates with the pressure of a medium and with the aid of which the individual cards (11) can be grasped and held tightly by the pressure action of the medium, in particular suction force.

24. Device according to Claim 23, **characterized in that** the pressure device or suction device (34) of the holding apparatuses (32) are fed with a medium which is under pressure, for example subatmospheric pressure, in particular gas, for example air, by a central supply unit (35).

25. Device according to Claim 23 or 24, **characterized in that** the at least one carrier (31) has a disc (38) which can be driven so as to revolve by means of a drive device (42), preferably in a direction (41) of rotation opposite to the forward transportation direction (22) of the path (20).

26. Device according to one of Claims 23 to 25, **characterized in that** the individual holding apparatuses (32) are formed from substantially radial arms (43) which are arranged on the at least one carrier (31), in particular the disc (38), at approximately equal circumferential angular distances from one another and have pressure devices or suction devices (34).

27. Device according to Claim 26, **characterized in that** each arm (43) contains an inner pressure medium channel as the pressure device or suction device (34), this pressure medium channel leading to the free end (44) of the arm (43), and there issuing into at least one opening (45) by means of which a pressure action, in particular a subatmospheric pressure action, is exerted on a card (11) in such a way that the card (11) is thus held at the end (44) of the arm (43).

28. Device according to Claim 27, **characterized in that** the inner pressure medium channel (34) of each arm (43) is connected to a circumferential annular groove (46) at the other end which is averted from the opening (45), the said annular groove being provided on a central carrying part (40) which carries the disc (38), supplying each arm (43) with pressure medium, in particular subatmospheric pressure, and being connected to the central supply unit (35), in particular the subatmospheric pressure source.

29. Device according to one of Claims 23 to 28, **characterized in that** each holding apparatus (32), in particular each arm (43), has an elastic sealing device (50), for example a rubber skirt (51), rubber lip, a folding bellows or the like, which surrounds the opening (45) at that end (44) which contains the opening (45), a card (11) which is in each case held under pressure, in particular subatmospheric pressure, against the arm (43) bearing at least substantially tightly against the said sealing device.

30. Device according to one of Claims 23 to 29, **characterized in that** the quantity of subatmospheric pressure which is generated by the central supply unit (35) and supplied to individual holding apparatuses (32), in particular arms (43), is such that it is sufficient to tightly hold the card (11) when there is only one holding apparatus (32) which accommodates a card (11), which closes the opening (45) there during the suction operation, at the end (44), while the respective opening (45) in the other holding apparatuses (32) is open.

31. Device according to one of Claims 23 to 30, **characterized in that** each holding apparatus (32), in particular each arm (43), carries a transversely running stop (49) for in each case one card (11) at the end (44).

32. Device according to one of Claims 23 to 31, **characterized in that** the individual holding apparatuses (32), in particular arms (43), have individual contact pins (52), which are in each case held in the interior, as contact sensors (33), the said contact pins projecting by way of their rounded or pointed ends so far out of the end-face opening (45) that, when in each case a card (11) is tightly held, they are brought into electrically conductive physical contact with the contact area (13) of the said card and held.

33. Device according to Claim 32, **characterized in that** the ends of the contact sensors (33), in particular contact pins (52), are sprung.

34. Device according to one of Claims 23 to 33, **characterized in that** the contact sensors (33), in particular the contact pins (52), of each holding apparatus (32) are connected to electrical lines (54) which are routed through the interior of the respective holding apparatus (32) and which serve to supply energy and/or transmit information.

35. Device according to Claim 34, **characterized in that** the electrical lines (54, 55) are routed to a rotary transmitter (56) of the carrier (31), in particular of the disc (38), which for its part is connected to a unit (58) which serves for preferably centrally supplying power and/or supplying information.

36. Device according to one of Claims 23 to 35, **characterized in that** the at least one station (30) has a transfer apparatus (60) which acts between the path (20) and a holding apparatus (32) of the carrier (31), in particular of the disc (38), by means of which transfer apparatus a card (11) can be lifted away from the path (20) and can be moved to an acceptance position (61) which is preferably inclined in relation to the plane of the path (20), it being possible for the holding apparatus (32), in particular an arm (43), to accept the card (11) in the said acceptance position by suction.

37. Device according to Claim 36, **characterized in that** the transfer apparatus (60) has a lifting element (62) which is arranged and can be driven in a controlled manner beneath the path (20) in such a way that a card (11) which is transported on the path (20) can be grasped from below and can be lifted above the path (20) by means of the lifting element (62).

38. Device according to Claim 37, **characterized in that** the lifting element (62) can be driven in synchronism with the transportation speed of the path (20) by means of a drive device (63).

39. Device according to Claim 37 or 38, **characterized in that** the lifting element (62) can be driven by means of a cam controller (64).

40. Device according to one of Claims 37 to 39, **characterized in that** the lifting element (62) is held such that it can move by means of two inclined guide bodies (65 to 67) which are arranged on each side.

41. Device according to one of Claims 38 to 40, **characterized in that** the drive device (63) acts at least on a guide body (65, 67) which is arranged on one side of the lifting element (62).

42. Device according to one of Claims 23 to 41, **characterized in that** the at least one station (30) has a second transfer apparatus (80) at a distance from the transfer apparatus (60) in the transportation direction (22) of the path (20), it being possible for a card (11), preferably following one revolution of the carrier (31), in particular of the disc (38), to be detached from a holding apparatus (32) which tightly holds the card (11) and to be returned to the path (20) by means of said transfer apparatus (80).

43. Device according to Claim 42, **characterized in that** the second transfer apparatus is arranged with approximately mirror-image symmetry to the first transfer apparatus (60) and is designed to correspond to said first transfer apparatus.

44. Device according to Claim 42, **characterized in that** the second transfer apparatus (80) has two guide faces (81, 82) which are arranged above the path (20) and at a distance from one another transverse to said path and slope downward in the direction of revolution of the carrier (31), in particular of the disc (38), and against the forward transportation direction (22) of the path (20), a card (11) which is held on a holding apparatus (32) butting against said guide faces during revolution of the carrier (31) by way of its front corners (17, 18) on either side in such a way that the card (11) is detached from the end (44) of the holding apparatus (32) during the further revolving movement and is transferred to the path (20).

45. Device according to Claim 44, **characterized in that** the downward sloping guide faces (81, 82) run obliquely in relation to a plane which is approximately parallel to the plane of the path (20) at an angle (β) with the drop in each case running from the inside to the outside.

46. Device according to Claim 44 or 45, **characterized in that** the second transfer apparatus (80) has a shaft (85) which has, in the upper end region, the downward sloping guide faces (81, 82) on either side.

47. Device according to Claim 46, **characterized in that** the shaft (85) has shaft walls (83, 84) on either side, the path (20) running between the said shaft walls and the upper edges of said shaft walls which are averted from the path (20) have downward sloping (angle α) edge strips (86, 87) which are directed towards one another and of which the respective side which faces the path (20) forms the respective guide face (81, 82) in the revolving direction of the carrier (31).

48. Device according to one of Claims 23 to 47, **characterized in that** a plurality of stations (30), preferably of identical design, are arranged one behind the other in the transportation direction (22) of the path (20), for example one or more of the said stations being provided for reading the memories of the cards (11) and further subsequent stations being provided for programming the memories of the cards (11).

49. Device according to one of Claims 23 to 48, **characterized in that** a plurality of stations, preferably of identical design, are arranged next to one another transverse to the transportation direction (22) of the path (20), it being possible for the said stations to be moved by transverse movement into the region of the path (20) in the card holding position or card discharging position, and for example one or more of the said stations being provided for reading the memories of the cards (11) and further stations being provided for programming the memories of the cards (11).

## Revendications

1. Procédé de traitement, en particulier de lecture, de programmation ou similaires, de supports d'informations en forme de carte, par exemple des cartes de paiement, des cartes de crédit, des cartes d'identité ou des cartes (11) similaires qui sont dotées d'un circuit intégré (12) présentant au moins une mémoire, d'une puce ou similaires,
les cartes (11) étant amenées le long d'une piste (20) qui s'étend en ligne droite vers au moins un poste (30) dans lequel les cartes (11) sont saisies une à une par des dispositifs de maintien (32) d'au moins un support mobile (31), dotés chacun d'éléments de contact (33), et étant traitées pendant le déplacement du support (31) par une unité (58) par l'intermédiaire des éléments de contact (33),
les cartes (11) étant ensuite replacées sur la piste (20) par les dispositifs de maintien (32), **caractérisé en ce que**
le ou les supports (31) sont tournés autour d'un axe (37) situé au-dessus de la piste (20) et s'étendant transversalement par rapport à cette dernière, dans un plan qui est au moins aligné sur la piste (20), de telle sorte que les cartes (11) sont prélevées de la piste (20) transversalement par rapport à la surface des cartes (11) et successivement dans ce plan qui contient la piste (20), sont traitées pendant le déplacement du support (31) et sont ensuite replacées sur la piste (20) et
**en ce que** les différentes cartes (11) sont saisies et maintenues par l'action de la pression d'un fluide.

2. Procédé selon la revendication 1, **caractérisé en ce que** lors de leur saisie et de leur maintien par l'action de la pression, les différentes cartes (11) sont transportées et maintenues en même temps par la surface de contact (13) en contact électriquement conducteur avec les éléments de contact (33).

3. Procédé selon les revendications 1 ou 2, **caractérisé en ce que** les différentes cartes (11) sont saisies et maintenues par la poussée de la surpression d'un fluide gazeux, par exemple de l'air.

4. Procédé selon les revendications 1 ou 2, **caractérisé en ce que** les différentes cartes (11) sont saisies et maintenues par l'aspiration de la dépression d'un fluide gazeux, par exemple de l'air.

5. Procédé selon l'une des revendications 1 à 4, **caractérisé en ce qu'**après le traitement, les différentes cartes (11) sont replacées sur la piste (20) par suppression de l'action de la pression.

6. Procédé selon les revendications 4 et 5, **caractérisé en ce qu'**après leur traitement, les différentes cartes aspirées (11) sont replacées sur la piste (20) en étant soufflées par la surpression d'un fluide gazeux, par exemple l'air.

7. Procédé selon l'une des revendications 1 à 6, **caractérisé en ce qu'**après le traitement, les différentes cartes (11) sont détachées des dispositifs de maintien (32) et replacées sur la piste (20) par des moyens mécaniques.

8. Procédé selon l'une des revendications 1 à 7, **caractérisé en ce que** le fluide appliqué sur les différentes cartes (11), en particulier le fluide en dépression servant à l'aspiration ou le fluide en surpression servant au soufflage, est amené vers les différentes cartes (11) à travers les différents dispositifs de maintien (32).

9. Procédé selon l'une des revendications 1 à 8, **caractérisé en ce que** le fluide appliqué sur les différentes cartes (11), en particulier le fluide en dépression servant à l'aspiration ou le fluide en surpression servant au soufflage, est amené au support (31) par une unité d'alimentation (35), en particulier une source de dépression.

10. Procédé selon l'une des revendications 1 à 9, **caractérisé en ce que** le ou les supports (31) peuvent tourner en boucle fermée avec les différents dispositifs de maintien (32) dotées des éléments de contact (33).

11. Procédé selon la revendication 10, **caractérisé en ce que** le ou les supports (31) peuvent tourner autour d'un axe (37) sensiblement parallèle à la piste (20) et s'étendant sensiblement à la perpendiculaire de cette dernière.

12. Procédé selon l'une des revendications 1 à 11, **caractérisé en ce que** le ou les supports (31) tournent en boucle fermée au-dessus de la piste (20) avec les différents dispositifs de maintien (32) dotés des éléments de contact (33).

13. Procédé selon l'une des revendications 1 à 12, **caractérisé en ce que** le traitement de chaque carte (11) est terminé après un tour du ou des supports (31).

14. Procédé selon l'une des revendications 1 à 13, **caractérisé en ce que** le diamètre du ou des supports (31) et/ou sa vitesse de rotation en boucle et/ou le nombre des dispositifs de maintien (32) dotés d'éléments de contact (33) et placés à la périphérique du support (31) à des intervalles angulaires sont sélectionnés en fonction d'une capacité prédéterminée de traitement.

15. Procédé selon l'une des revendications 1 à 14, **caractérisé en ce que** l'énergie électrique et les informations sont transmises au support ou aux supports (31) et à leurs différents éléments de contact (33) au moyen d'un dispositif rotatif de transfert (56).

16. Procédé selon l'une des revendications 1 à 15, **caractérisé en ce que** les différentes cartes (11) présentes dans le poste (30) sont transférées par les dispositifs de maintien (32) du ou des supports (31), dotés des éléments de contact (33), dans une position de transfert (pente 61) dans laquelle les différentes cartes (11) sont relevées de la piste (20) et ensuite vers le haut.

17. Procédé selon la revendication 16, **caractérisé en ce que** dans leur position de transfert (pente 61), les différentes cartes (11) s'étendent dans un plan qui s'étend obliquement par rapport au plan de la piste (20).

18. Procédé selon l'une des revendications 1 à 17, **caractérisé en ce qu'**avant leur transfert, les différentes cartes (11) sont reprises sur la piste (20), en particulier relevées, au moyen d'un dispositif de transfert (60) et sur un dispositif de maintien (32) correspondant doté d'éléments de contact (33), et sont amenées dans la position de transfert (pente 61).

19. Procédé selon l'une des revendications 1 à 18, **caractérisé en ce que** les différentes cartes (11) sont orientées sur chacun des dispositifs de maintien (32) en une position reproductible, par exemple au moyen d'une butée (49).

20. Procédé selon l'une des revendications 1 à 19, **caractérisé en ce que** les différentes cartes (11) sont traitées les unes après les autres ou les unes à côté des autres en plusieurs postes (30).

21. Procédé selon l'une des revendications 1 à 20, **caractérisé en ce que** les informations que contiennent les différentes cartes (11), par exemple des codes, sont lues dans un premier poste (30) et sont ensuite programmées dans un deuxième poste qui suit et/ou dans un autre poste.

22. Procédé selon l'une des revendications 20 à 22, **caractérisé en ce qu'**après être passées dans le premier poste (30), les différentes cartes (11) sont replacées sur la piste (20) et sont reprises sur la piste (20) dans le deuxième poste.

23. Système de traitement, en particulier de lecture, de programmation ou similaires, de supports d'informations en forme de cartes, par exemple des cartes de paiement, des cartes de crédit, des cartes d'identité ou des cartes (11) similaires dotées d'un circuit intégré (12) qui présente au moins un mémoire, d'une puce ou similaires, et présentant
une piste (20) qui s'étend en ligne droite et qui présente la forme d'un parcours de transport qui permet le transport des cartes (11), au moins un poste (30) situé dans la zone occupée par la piste (20) et
au moins un support mobile (31) doté de plusieurs dispositifs de maintien (32) tous dotés d'éléments de contact (33) qui servent à saisir et maintenir chaque carte (11) pendant la phase de déplacement du support (31), le traitement ayant lieu pendant ce laps de temps, et à les replacer sur la piste (20),
**caractérisé en ce que**
le ou les supports (31) sont tournés autour d'un axe (37) situé au-dessus de la piste (20) et s'étendant transversalement par rapport à cette dernière, dans un plan qui est au moins aligné sur la piste (20), de telle sorte que les cartes sont prélevées de la piste (20) transversalement par rapport à la surface des cartes et successivement dans ce plan qui contient la piste (20), sont traitées pendant le déplacement du support (31) et sont ensuite replacées sur la piste (20) et
**en ce que** les différents dispositifs de maintien (32) présentent tous un dispositif de poussée ou un système d'aspiration (34) qui travaille à l'aide de la pression d'un fluide et à l'aide duquel les différentes cartes (11) peuvent être saisie et maintenues par l'action de la pression du fluide, en particulier une force d'aspiration.

24. Système selon la revendication 23, **caractérisé en ce que** le système de poussée ou le système d'aspiration (34) des dispositifs de maintien (32) sont alimentés en un fluide sous pression, par exemple en dépression, et en particulier un gaz, par exemple de l'air, par une unité centrale d'alimentation (35).

25. Système selon les revendications 23 ou 24, **caractérisé en ce que** le ou les supports (31) présentent un disque (38) qui peut être entraîné en boucle fermée au moyen d'un système d'entraînement (42), de préférence dans un sens de rotation (41) opposé au sens de transport vers l'avant (22) de la piste (20).

26. Système selon l'une des revendications 23 à 25, **caractérisé en ce que** les différents dispositifs de maintien (32) sont formés de bras (43) essentiellement radiaux qui sont disposés sur au moins un support (31) et en particulier sur le disque (38) à des intervalles angulaires sensiblement égaux et qui présentent les systèmes de poussée ou systèmes d'aspiration (34).

27. Système selon la revendication 26, **caractérisé en ce que** chaque bras (43) contient comme système de poussée ou système d'aspiration (34) un canal intérieur à fluide sous pression qui conduit à l'extrémité libre (44) du bras (43) pour y déboucher dans au moins une ouverture (45) par laquelle l'action d'une pression et en particulier l'action d'une dépression est exercée sur une carte (11) de telle sorte que la carte (11) soit ainsi maintenue à l'extrémité (44) du bras (43).

28. Système selon la revendication 27, **caractérisé en ce que** le canal intérieur (34) à fluide sous pression de chaque bras (43) communique à son autre extrémité, non tournée vers l'ouverture (45), avec une rainure annulaire périphérique (46) qui est prévue sur une partie porteuse centrale (40) qui porte le disque (38), alimente chaque bras (43) en fluide sous pression et en particulier en dépression et communique avec l'unité centrale d'alimentation (35), en particulier la source de dépression.

29. Système selon l'une des revendications 23 à 28, **caractérisé en ce que** chaque dispositif de maintien (32) et en particulier chaque bras (43) présente à son extrémité (44) qui contient l'ouverture (45) un système d'étanchéité (50), par exemple une jupe en caoutchouc (51), une lèvre en caoutchouc, un soufflet ou similaires, élastiques et entourant l'ouverture (45), et sur lequel une carte (11) maintenue sur le bras (43) sous pression et en particulier sous dépression repose de manière essentiellement étanche.

30. Système selon l'une des revendications 23 à 29, **caractérisé en ce que** la dépression formée par l'unité centrale d'alimentation (35) et apportée aux différents dispositifs de maintien (32) et en particulier aux bras (43), est dimensionnée de telle sorte que lorsqu'un seul dispositif de maintien (32) reprend à l'extrémité (44) une carte (11) qui ferme lors de l'aspiration l'ouverture (45) qui y est située suffit pour maintenir la carte (11) tandis que l'ouverture (45) correspondante des autres dispositifs de maintien (32) reste ouverte.

31. Système selon l'une des revendications 23 à 30, **caractérisé en ce que** chaque dispositif de maintien (32) et en particulier chaque bras (43) porte à l'extrémité (44) une butée (49) s'étendant obliquement pour chacune des cartes (11).

32. Système selon l'une des revendications 23 à 31, **caractérisé en ce que** les différents dispositifs de maintien (32) et en particulier les bras (43) présentent chacun différentes tiges de contact (52) maintenues à l'intérieur et servant d'éléments de contact (33) et dont l'extrémité arrondie ou pointue déborde de l'ouverture terminale (45) de telle sorte que lorsqu'une carte (11) y est maintenue, elle est amenée et maintenue en contact électriquement conducteur avec leur surface de contact (13).

33. Système selon la revendication 32, **caractérisé en ce que** les extrémités des éléments de contact (33) et en particulier des tiges de contact (52) est élastique.

34. Système selon l'une des revendications 23 à 33, **caractérisé en ce que** les éléments de contact (33) et en particulier les tiges de contact (52) de chaque dispositif de maintien (32) sont reliées à des conducteurs électriques (54) qui sont passés à l'intérieur de chaque dispositif de maintien (32) et qui servent à l'alimentation en énergie et/ou à l'apport d'informations.

35. Système selon la revendication 34, **caractérisé en ce que** les conducteurs électriques (54, 55) sont amenés à un dispositif (56) de transfert de rotation du support (31) et en particulier du disque (38) qui lui-même est relié à une unité (58) qui sert à l'alimentation de préférence centrale en courant et/ou à l'alimentation en informations.

36. Système selon l'une des revendications 23 à 35, **caractérisé en ce que** le ou les postes (30) présentent un dispositif de transfert (60) qui agit entre la piste (20) et un dispositif de maintien (32) du support (31), en particulier du disque (38), et au moyen duquel une carte (11) peut être relevée de la piste (20) et être amenée dans une position de transfert (61) de préférence oblique par rapport au plan de la piste (20) et dans laquelle la carte (11) peut être transférée par aspiration par un dispositif de maintien (32), en particulier un bras (43).

37. Système selon la revendication 36, **caractérisé en ce que** le dispositif de transfert (60) présente un organe de relèvement (62) qui peut être entraîné et commandé en dessous de la piste (20) de telle sorte qu'une carte (11) transportée sur la piste (20) puisse être saisie par le bas et relevée au-dessus de la piste (20) au moyen de l'organe de relèvement (62).

38. Système selon la revendication 37, **caractérisé en ce que** l'organe de relèvement (62) peut être entraîné de manière synchronisée par rapport à la vitesse de transport de la piste (20) au moyen du système d'entraînement (63).

39. Système selon les revendications 37 ou 38, **caractérisé en ce que** l'organe de relèvement (62) peut être entraîné au moyen d'une commande (64) à cames.

40. Système selon l'une des revendications 37 à 39, **caractérisé en ce que** l'organe de relèvement (62) est maintenu à déplacement au moyen de deux bras obliques (65 à 67) disposés sur chaque côté.

41. Système selon l'une des revendications 38 à 40, **caractérisé en ce que** le système d'entraînement (63) engage au moins un bras (65, 67) disposé sur un côté de l'organe de relèvement (62).

42. Système selon l'une des revendications 23 à 41, **caractérisé en ce que** le ou les postes (30) présentent dans la direction du transport (22) de la piste (20) et à distance du dispositif de transfert (60) un deuxième dispositif de transfert (80) au moyen duquel une carte (11), de préférence après un tour du support (31) et en particulier du disque (38) peut être détachée du dispositif de maintien (32) qui maintient la carte (11) et être replacée sur la piste (20).

43. Système selon la revendication 42, **caractérisé en ce que** le deuxième dispositif de transfert est disposé et configuré de la même manière que le premier dispositif de transfert (60) et symétrique par rapport à lui.

44. Système selon la revendication 42, **caractérisé en ce que** le deuxième dispositif de transfert (80) présente deux surfaces de guidage (81, 82) qui descendent obliquement, disposées au-dessus de la piste (20) et transversalement à distance l'une de l'autre, dans la direction périphérique du support (31), en particulier du disque (38) et dans le sens opposé à la direction de transport avant (22) de la piste (20), et sur lesquels, lorsque le support (31) tourne, une carte (11) maintenue sur un dispositif de maintien (32) vient buter par ses deux sommets avant (17, 18) de telle sorte que lorsque la carte (11) poursuit son déplacement en boucle, elle est libérée de l'extrémité (44) du dispositif de maintien (32) et est transférée sur la piste (20).

45. Système selon la revendication 44, **caractérisé en ce que** les surfaces de guidage (81, 82) qui descendent obliquement s'étendent obliquement sous un angle (β) par rapport à un plan sensiblement parallèle au plan de la piste (20), et descendent de l'intérieur vers l'extérieur.

46. Système selon les revendications 44 ou 45, **caractérisé en ce que** le deuxième dispositif de transfert (80) présente un puits (85) qui présente les surfaces de guidage (81, 82) dans sa partie d'extrémité supérieure.

47. Système selon la revendication 46, **caractérisé en ce que** le puits (85) présente des deux côtés des parois de puits (83, 84) contre lesquelles s'étend la piste (20) et dont les bords supérieurs, non tournés vers la piste (20), présentent dans le sens périphérique du support (31) des rubans de bordure (86, 87) descendant obliquement (angle α) et orientés l'un vers l'autre, dont le côté tourné vers la piste (20) forme la surface de guidage (81, 82) respective.

48. Système selon l'une des revendications 23 à 47, **caractérisé en ce que** plusieurs postes (30) de préférence configurés à l'identique sont disposés les uns derrière les autres dans la direction du transport (22) de la piste (20), et dont un ou plusieurs sont prévus pour la lecture de la mémoire des cartes (11) et d'autres sont prévus ensuite pour programmer la mémoire des cartes (11).

49. Système selon l'une des revendications 23 à 48, **caractérisé en ce que** plusieurs postes de préférence configurés à l'identique sont disposés les uns à côté des autres transversalement par rapport à la direction du transport (22) de la piste (20), peuvent être déplacés par un déplacement transversal dans la zone occupée par la piste (20) jusque dans la position de reprise de carte ou la position de libération de carte et parmi lesquels par exemple un ou plusieurs sont prévus pour lire la mémoire des cartes (11) et d'autres postes sont prévus pour programmer la mémoire des cartes (11).
